# EUROPÄISCHE PATENTSCHRIFT

(11) **EP 0 474 075 B1**
(45) Veröffentlichungstag und Bekanntmachung des Hinweises auf die Patenterteilung: **05.06.1996**
(21) Anmeldenummer: 91114228.9
(22) Anmeldetag: 24.08.1991
(51) Int. Cl.: C08G 8/28, C08G 8/18, C08G 10/04, C08G 14/12, D06P 1/56

(54) **Aromatische Kondensationsprodukte**
Aromatic condensation products
Produits de condensation aromatiques

(30) Priorität: 07.09.1990 DE 4028534
(43) Veröffentlichungstag der Anmeldung: 11.03.1992
(73) Patentinhaber: BAYER AG, 51368 Leverkusen (DE)
(72) Erfinder: Walz, Klaus, Dr., W-5090 Leverkusen 3 (DE); Hendricks, Udo, Dr., W-5068 Odenthal (DE); Ehlert, Hans-Albert, Dipl.-Ing., W-5090 Leverkusen 1 (DE); Lesszinsky, Fritz, Ing.-grad., W-5060 Bergisch-Gladbach 2 (DE)

(56) Entgegenhaltungen:
- EP-A- 0 026 314
- DE-A- 1 960 616
- DE-A- 1 961 369
- DE-A- 2 609 531
- US-A- 3 790 344

## Beschreibung

Die vorliegende Erfindung betrifft weitgehend farblose, wasserlösliche, Sulfonat- und/oder Carboxylatgruppen enthaltende aromatische Formaldehyd-Kondensationsprodukte, dadurch gekennzeichnet, daß sie erhältlich sind, indem während und/oder nach der Kondensationsreaktion reduzierend wirkende Mittel aus der Gruppe von Wasserstoff, aktiviertem Wasserstoff, Metallhydriden, Dithioniten, Thiosulfaten, Sulfoxylaten, Hydroxymethansulfinaten, Sulfinaten oder Thioharnstoffdioxid, phosphoriger Säure, hypophosphoriger Säure oder deren Salzen sowie organische Reduktionsmittel zugesetzt werden, sowie deren Verwendung zur Behandlung von Textilen und Leder.

Wasserlösliche aromatische Formaldehyd-Kondensationsprodukte sind an sich bekannt (siehe Ullmanns Enzyklopädie der technischen Chemie Bd. 16 (1979), S. 140 ff.) und können nach den dort referierten Verfahren hergestellt werden, oder nach Verfahren, wie sie beispielsweise in Houben-Weyl: "Methoden der organischen Chemie" Bd. 14/2, S. 263-292, G. Thieme Verlag Stuttgart (1963) oder in DOS 1 960 616 und DOS 1 961 369 beschrieben sind. Phenol-Formaldehyd-Kondensate sind auch aus EP-A 26 314 bekannt. Sie enthalten Sulfonsäuregruppen, die direkt an den aromatischen Kern des Phenols gebunden sind und durch H₂SO₄ als Sulfonierungsmittel eingeführt werden können, und weitere Sulfonsäuregruppen, die über eine Methylengruppe an den aromatischen Kern gebunden sind und durch Reaktion mit Formaldehyd unter Ausbildung von Methylolgruppen und deren weitere Umsetzung mit Bisulfit erhalten werden.

Die bekannten aromatischen Formaldehyd-Kondensationsprodukte weisen jedoch eine starke Eigenfärbung auf, was sich besonders bei einer Anwendung dieser Produkte im Textilbereich als sehr nachteilig erwiesen hat.

Gegenüber den bekannten aromatischen Formaldehyd-Kondensationsprodukten zeichnen sich die erfindungsgemäß hergestellten Produkte durch eine drastisch verringerte Eigenfarbe aus. Darüberhinaus wird die Vergilbungsneigung mit und ohne Lichteinwirkung von Textilien, die mit diesen Produkten behandelt sind, sei es durch Einsatz im Färbebad oder als Nachbehandlung, wesentlich verringert.

Unter wasserlöslichen, Sulfonat- und/oder Carboxylatgruppen enthaltenden Kondensationsprodukten werden oligomere oder polymere Produkte verstanden, die durch Kondensation von einer oder mehreren kondensationsfähigen aromatischen und gegebenenfalls nichtaromatischen Verbindungen mit Formaldehyd erhältlich sind, wobei mindestens eine der aromatischen Verbindungen mindestens eine Sulfonat- und/oder Carboxylatgruppe enthalten muß, oder bei denen die Sulfonatgruppen während oder nach der Kondensation eingeführt werden.

Geeignete kondensationsfähige aromatische Verbindungen sind z.B. Benzol- und Naphthalinderivate, die durch C₁-C₄-Alkyl- und/oder Hydroxy-, und/oder Cycloalkyl, und/ oder C₁-C₄-Alkoxy-, und/oder C₁-C₄-Hydroxyalkoxy-, und/ oder Aroxy-, und/oder Aralkoxy-, und/oder Carboxy-, und/oder Carbalkoxy-, und/oder Sulfonat-, und/oder Arylsulfonyl-Reste substituiert sind.

Beispielhaft seien genannt: Xylol, Mesitylen, Phenol, Kresole, Xylenole, Butylphenol, Cyclohexylphenol, Anisol, Phenoxyethanol, Phenoxypropanol, Phenoxyessigsäure, Phenolsulfonsäure, Anisolsulfonsäure, Diphenylether, Ditolylether, Dioxydiphenylsulfon, 2,2-Bis-4-hydroxyphenyl-propan, 4-Hydroxydiphenyl-sulfon, Bis-(hydroxyethoxyphenyl)sulfon, Salicylsäure, 4-Hydroxybenzoesäure, Naphthalin, Naphthole, Isobutylnaphthalin, Naphtholsulfonsauren, Naphthylmethylether, Diphenylsulfonsäure, sulfoniertes Dioxydiphenylsulfon, Diphenylethersulfonsäure.

Neben den kondensationsfähigen aromatischen Verbindungen können für die Herstellung der wasserlöslichen Kondensationsprodukte auch noch zusätzlich nichtaromatische kondensationsfähige Verbindungen eingesetzt werden, wie z.B. Harnstoff, Thioharnstoff, Ethylenharnstoff, Ethylenthioharnstoff und/oder Melamin.

Die Einführung von Sulfonatgruppen während oder nach der Kondensation kann in üblicher Weise erfolgen, beispielsweise durch Umsetzung mit Schwefeltrioxid, Schwefelsäure oder Chlorsulfonsäure, oder Umsetzung mit Formaldehyd und Sulfiten oder Bisulfiten.

Besonders bevorzugte wasserlösliche Kondensationsprodukte sind solche, die durch gemeinsame Kondensation von Dioxydiphenylsulfon und Phenolsulfonsäure und/oder Diphenylsulfonsäure und/oder Dioxydiphenylsulfonsäure und/oder Ditolylethersulfonsäure und/oder Naphthalinsulfonsäuren und/oder Hydroxybenzoesäuren mit Formaldehyd hergestellt werden. Weitere besonders bevorzugte Kondensationsprodukte werden durch Kondensation von Dioxydiphenylsulfon mit Formaldehyd und Alkalisulfiten oder -bisulfiten, sowie von Dioxydiphenylsulfon-sulfonsäuren mit Formaldehyd enthalten.

Als reduzierend wirkende Mittel werden solche aus der Gruppe von Wasserstoff, aktiviertem Wasserstoff, Metallhydriden, wie Natriumhydrid, Natriumborhydrid oder Lithiumaluminiumhydrid, Dithioniten, Thiosulfaten, Sulfoxylaten, Hydroxymethansulfinate, Sulfinaten oder Thioharnstoffdioxid, phosphoriger Säure, hypophosphoriger Säure oder deren Salze, sowie organische Reduktionsmittel wie Glucose, Gluconsäure oder Hydroxyaceton.

Die eingesetzten Mengen an reduzierend wirkenden Mitteln betragen (bezogen auf das fertige Kondensationsprodukt) 0,1 bis 20 %; vorzugsweise 0,5 bis 10 %.

In einer bevorzugten Ausführungsform setzt man vor, während und/oder nach der Kondensation einen oder mehrere Komplexbildner zu. Als solche können übliche komplexbildende Mittel verwendet werden, wie sie beispielsweise in C.H. Fischer-Bobsin: Internationales Lexikon, Textilveredlung und Grenzgebiete, 4. Auflage 1975, A. Laumannsche Verlaosbuchhandlung, Dülmen, S. 918 ff beschrieben sind.

Geeignete Komplexbildner sind beispielsweise: Weinsäure, Zitronensäure, Nitrilotriesssigsäure, Ethylendiamintetraessigsäure sowie Polyaminopolycarbonsäuren oder deren Alkali- oder Ammoniumsalze, kondensierte Phosphate wie z.B. Natrium-tri-polyphosphat oder -metaphosphat, sowie Phosphonsäuren, insbesondere Carboxylgruppen und/oder Hydroxylgruppen und/oder Aminogruppen enthaltende Phosphonsäuren oder deren Salze, wie z.B. Phosphonobernsteinsäure, 2-Phosphono-1,2,4-butantricarbonsäure, Aminomethanphosphonsäure, Amino-tris-methylenphosphonsäure, Hydroxymethanphosphonsäure, Hydroxyethanphosphonsäure, Hydroxyethandiphosphonsäure, Hydroxyethyl-aminomethylenphosphonsäure, Diethylentriamin-penta-methylenphosphonsäure oder deren Alkali- oder Ammoniumsalze.

Bezogen auf die Kondensationsprodukte können die Komplexbildner in Mengen von 0,1 - 10 %, vorzugsweise 0,5 - 5 % eingesetzt werden. Bevorzugte Präparationen werden erhalten, wenn man die aromatischen Kondensationsprodukte in Gegenwart von
- 0,5 - 10 %: eines Reduktionsmittels, insbesondere Alkali-oder Ammonium-hydroxymethansulfinate oder-dithionite, oder Thioharnstoffdioxid, und
- 0,5 - 5 %: eines Komplexbildners, insbesondere Nitrilotriessigsäure, Ethylendiamintetraessigsäure, Hydroxyethandiphosphonsäure, und Aminomethylenphoshonsäuren
herstellt oder die fertigen Kondensationsprodukte in wässriger Lösung mit diesen Mitteln versetzt und gegebenenfalls kurze Zeit auf 30 bis 100°C erhitzt.

Die erfindungsgemäßen Präparationen können außer den in der bevorzugten Ausführungsform genannten Komponenten noch weitere Bestandteile enthalten, wie Lösungsmittel, Lösungsvermittler, anionische oder nichtionische Polymerisate, Emulgatoren, Schaumdämpfungsmittel u.a.

Die erfindungsgemäß hergestellten Kondensationsprodukte und Präparationen sind in verschiedenen industriellen Bereichen einsetzbar, wie z.B. als Dispergiermittel für wasserunlösliche Feststoffe, z.B. Farbstoff, Pigmente, als Reservierungsmittel und Echtheitsverbesserungsmittel in der Textilfärberei, als Gerbstoffe oder in der fleckabweisenden Ausrüstung von Textilmaterialien aus z.B. synthetischen Polyamidfasern.

### Beispiel 1

134 Teile Phenolsulfonsäure, 50 Teile Wasser, 250 Teile 4,4'-Dihydroxydiphenylsulfon und 45 Teile 45 %ige Natronlauge werden in einem Druckbehälter vermischt und dann mit 90 Teilen 30 %iger Formaldehydlösung versetzt. Nach Schließen des Behälters wird unter Rühren auf 120°C erhitzt und 5 Stunden bei dieser Temperatur kondensiert. Nach dem Abkühlen auf ca. 80 - 90°C werden 300 Teile Wasser zugegeben, wobei eine dunkelbraune, viskose Lösung A entsteht.

626 Teile dieser Lösung A werden mit 338 Teilen Wasser, ca. 20 Teilen Natronlauge (45 %ig) und 15 Teilen Thioharnstoffdioxid versetzt, 30 Minuten bei 20 - 30°C gerührt und dann langsam auf 90°C erhitzt. Es werden ca. 1.000 Teile einer hellfarbigen Lösung erhalten, deren Farbzahl 7 - 10 beträgt.

Eine zum Vergleich hergestellte Lösung des Kondensationsproduktes derselben Konzentration wurde durch Verdünnung der Lösung A mit 373 Teilen Wasser hergestellt. Die erhaltene Lösung besitzt eine Farbzahl von 500 - 600.

### Beispiel 2

Ein entsprechend Beispiel 1 hergestelltes Kondensationsprodukt aus 112 Teilen technischem Dihydroxydiphenylsulfon, 41 Teilen technischer Phenolsulfonsäure (65 %ig in Wasser), 40 Teilen Natronlauge (45 %ig),46 Teilen Formaldehyd (30 %ig) und 150 Teilen Wasser wird mit 27 Teilen Ethylenglykol, 1,5 Teilen Natronlauge (45 %ig), 8,2 Teilen Thioharnstoffdioxid und 120 Teilen Wasser versetzt und unter Rühren 1 Stunde auf 90 - 95 °C erhitzt. Es werden ca. 540 Teile einer hellbraunen Lösung erhalten (Farbzahl 30).

Eine Lösung gleicher Konzentration, jedoch ohne Nachbehandlung mit Thioharnstoffdioxid besitzt eine Farbzahl von 900 - 1000.

### Beispiel 3

In einem Druckbehälter werden 125 Teile Dioxydiphenylsulfon, 25 Teile Natriumsulfit, 18 Teile Natronlauge (45 %ig), 56 Teile Formaldehydlösung (30 %ig) und 257 Teile Wasser vermischt. Nach Schließen des Behälters wird unter Rühren auf 120 - 125°C erhitzt und 24 Stunden kondensiert.

127 Teile der erhaltenen Lösung werden mit 3 Teilen Natriumhydroxymethansulfinat, 2 Teilen Nitrilotriessigsäure und 67 Teilen Wasser versetzt und 12 Stunden bei Raumtemperatur gerührt. Es werden ca. 200 Teile einer fast farblosen Lösung erhalten. (Farbzahl 4 - 7)

Durch Verdünnung der bei der Herstellung des Kondensationsproduktes erhaltenen Lösung auf denselben Wirkstoffgehalt wird eine Lösung mit einer Farbzahl von 300 - 400 erhalten.

### Beispiel 4

209 Teile der gemäß Beispiel 1 hergestellten Lösung A werden mit 8,4 Teilen Natronlauge (45 %ig), 6 Teilen Natrium-hydroxy-methansulfinat, 152 Teilen Wasser und 2,4 Teilen Hydroxyethan-1,1-diphosphonsäure versetzt und 1 Stunde bei Raumtemperatur gerührt. Anschließend erhitzt man 30 Minuten lang auf 80 - 90°C. Es werden ca. 375 Teile einer fast farblosen Lösung erhalten. (Farbzahl 5 - 10)

### Beispiel 5

117 Teile Diphenylether werden mit 82,8 Teilen 98%iger Schwefelsäure versetzt und 4 Stunden bei 130 bis 140°C gerührt. Nach dem Abkühlen auf 50 bis 60°C werden 180 Teile Wasser, 160 Teile technisches Dihydroxydiphenylsulfon und 106 Teile einer wäßrigen 30%igen Formaldehyd-Lösung zugesetzt. Man erhitzt auf 90 bis 95°C und rührt bei dieser Temperatur 6 Stunden. Nach dem Abkühlen auf 60 bis 70°C versetzt man mit 400 Teilen Wasser und 180 Teilen 25%iger Natronlauge. Nach Klärung durch Filtration erhält man eine Lösung mit einem Trockengehalt von 32 %, einer Viskosität von 8,4 mPa.s. bei 20°C und einer Jodfarbzahl von 250 bis 300.

100 g der Lösung werden mit 1,5 Teilen Natriumdithionit und 0,6 Teilen Hydroxyethan-1,1-diphosphonsäure unter Stickstoffatmosphäre 30 Minuten auf 90 bis 95°C erhitzt. Man erhält eine Lösung mit einer Farbzahl von 4 bis 7.

### Beispiel 6

68,8 Teile Anisol werden bei Raumtemperatur mit 80 Teilen 98%iger Schwefelsäure versetzt und anschließend 30 Minuten bei 90 bis 95°C gerührt. Man fügt 60 Teile Wasser, 115 Teile technisches Dihydroxydiphenylsulfon und 78 Teile einer 30%igen wäßrigen Formaldehyd-Lösung hinzu, erhitzt langsam auf 100 bis 105°C und rührt 3 Stunden bei dieser Temperatur. Die überstehende Lösung wird von dem entstandenen Harz abgegossen, das Harz wird mit 400 Teilen Wasser und 260 Teilen 20%iger Natronlauge versetzt und bei 60 bis 70°C bis zur Lösung gerührt. Nach Klärung durch Filtration erhält man eine Lösung mit einem Trockengehalt von 28,5 %, einer Viskosität von 5,3 mPa.s bei 20°C und einer Jodfarbzahl von 160 bis 200.

100 g der Lösung werden mit 3 Teilen Natriumdithionit und 0,6 Teilen Hydroxyethan-1,1-diphosphonsäure unter Stickstoffatmosphäre 30 Minuten auf 90 bis 95°C erhitzt. Man erhält eine Lösung mit einer Farbzahl von 7.

## Patentansprüche

1. Weitgehend farblose, wasserlösliche, Sulfonatund/oder Carboxylatgruppen enthaltende aromatische Formaldehyd-Kondensationsprodukte, dadurch gekennzeichnet, daß sie erhältlich sind, indem während und/oder nach der Kondensationsreaktion reduzierend wirkende Mittel aus der Gruppe von Wasserstoff, aktiviertem Wasserstoff, Metallhydriden, Dithioniten, Thiosulfaten, Sulfoxylaten, Hydroxymethansulfinaten, Sulfinaten oder Thioharnstoffdioxid, phosphoriger Säure, hypophosphoriger Säure oder deren Salzen, sowie organische Reduktionsmittel zugesetzt werden.

2. Aromatische Formaldehyd-Kondensationsprodukte des Anspruchs 1, dadurch gekennzeichnet, daß als kondensationsfähige aromatische Verbindungen Benzolund Naphthalinderivate, die durch C₁-C₄-Alkyl-und/oder Hydroxy-, und/oder Cycloalkyl, und/oder C₁-C₄-Alkoxy-, und/oder C₁-C₄-Hydroxyalkoxy-, und/ oder Aroxy-, und/oder Aralkoxy-, und/oder Carboxy-, und/oder Carbalkoxy-, und/oder Sulfonat-, und/oder Arylsulfonyl-Reste substituiert sind, verwendet werden.

3. Aromatische Formaldehyd-Kondensationsprodukte der Ansprüche 1 und 2, dadurch gekennzeichnet, daß neben den kondensationsfähigen aromatischen Verbindungen gegebenenfalls auch noch zusätzlich nichtaromatische, kondensationsfähige Verbindungen eingesetzt werden.

4. Aromatische Formaldehyd-Kondensationsprodukte der Ansprüche 1 bis 4, dadurch gekennzeichnet, daß es sich bei den nichtaromatischen, kondensationsfähigen Verbindungen um Harnstoff, Thioharnstoff, Ethylenharnstoff, Ethylenthioharnstoff und/oder Melamin handelt.

5. Aromatische Formaldehyd-Kondensationsprodukte der Ansprüche 1 bis 4, dadurch gekennzeichnet, daß die wasserlöslichen Kondensationsprodukte solche sind, die durch gemeinsame Kondensation von Dioxydiphenylsulfon und Phenolsulfonsäure und/oder Diphenylsulfonsäure und/oder Dioxydiphenylsulfonsäure und/oder Ditolylethersulfonsäure und/oder Naphthalinsulfonsäuren und/oder Hydroxybenzoesäuren mit Formaldehyd oder durch Kondensation von Dioxydiphenylsulfon mit Formaldehyd und Alkalibisulfiten, sowie von Dioxydiphenylsulfon-sulfonsäure mit Formaldehyd erhalten werden.

6. Präparationen, enthaltend aromatische Formaldehyd-Kondensationsprodukte der Ansprüche 1 - 5, dadurch gekennzeichnet, daß man die aromatischen Kondensationsprodukte in Gegenwart von
0,5 - 10 % eines Reduktionsmittels aus der Gruppe der Alkali- oder Ammonium-hydroxymethansulfinate oder dithionite, oder Thioharnstoffdioxid, und
0,5 - 5 % eines Komplexbildners aus der Gruppe der Nitrilotriessigsaure, Ethylendiamintetraessigsäure, Hydroxyethandiphosphonsäure; und Aminomethylenphoshonsäuren
herstellt oder die fertigen Kondensationsprodukte in wässriger Lösung mit diesen Mitteln versetzt und gegebenenfalls kurze Zeit auf 30 bis 100°C erhitzt.

7. Aromatische Formaldehyd-Kondensationsprodukte des Anspruchs 1, dadurch gekennzeichnet, daß die wasserlöslichen Kondensationsprodukte durch Kondensation von Dioxydiphenylsulfon und Phenolsulfonsäure erhalten werden.

8. Aromatische Formaldehyd-Kondensationsprodukte des Anspruchs 1, dadurch gekennzeichnet, daß als reduzierend wirkendes Mittel Thioharnstoffdioxid, Alkali- oder Ammoniumsulfinate oder -dithionite verwendet wird.

9. Verwendung der aromatischen Formaldehyd-Kondensationsprodukte und Präparationen der Ansprüche 1 bis 8 zur Behandlung von Textilien und Leder.

## Claims

1. Substantially colourless, water-soluble aromatic formaldehyde condensation products containing sulphonate and/or carboxylate groups, characterised in that they are obtainable by adding, during and/or after the condensation reaction, agents having a reducing action selected from the group consisting of hydrogen, activated hydrogen, metal hydrides, dithionites, thiosulphates, sulphoxylates, hydroxymethanesulphinates, sulphinates or thiourea dioxide, phosphorous acid, hypophosphorous acid or salts thereof, and also organic reducing agents.

2. Aromatic formaldehyde condensation products of Claim 1, characterised in that the aromatic compounds capable of undergoing condensation which are used are benzene and naphthalene derivatives each of which is substituted by C₁-C₄-alkyl, and/or hydroxyl, and/or cycloalkyl, and/or C₁-C₄-alkoxy, and/or C₁-C₄-hydroxyalkoxy, and/or aroxy, and/or aralkoxy, and/or carboxyl, and/or carboalkoxy, and/or sulphonate, and/or arylsulphonyl radicals.

3. Aromatic formaldehyde condensation products of Claims 1 and 2, characterised in that, besides the aromatic compounds capable of undergoing condensation, if appropriate, non-aromatic compounds capable of undergoing condensation are also employed in

4. Aromatic formaldehyde condensation products of Claims 1 to 4, characterised in that the non-aromatic compounds capable of undergoing condensation are urea, thiourea, ethyleneurea, ethylenethiourea and/or melamine.

5. Aromatic formaldehyde condensation products of Claims 1 to 4, characterised in that the water-soluble condensation products are those which are obtained by the joint condensation of dihydroxydiphenyl sulphone and phenolsulphonic acid and/or biphenylsulphonic acid and/or dihydroxybiphenylsulphonic acid and/or ditolyl-ether-sulphonic acid and/or naphthalenesulphonic acids and/or hydroxybenzoic acids with formaldehyde or by the condensation of dihydroxydiphenyl sulphone with formaldehyde and alkali metal bisulphites, and of dihydroxydiphenyl-sulphone-sulphonic acid with formaldehyde.

6. Preparations containing aromatic formaldehyde condensation products of Claims 1 - 5, characterised in that the aromatic condensation products are prepared in the presence of
0.5 - 10 % of a reducing agent selected from the group consisting of alkali metal or ammonium hydroxymethanesulphinates or dithionites, or thiourea dioxide, and
0.5 - 5 % of a complex-former selected from the group consisting of nitrilotriacetic acid, ethylenediaminetetraacetic acid, hydroxyethanediphosphonic acid and aminomethylenephosphonic acids,
or these agents are added to the finished condensation products in aqueous solution and, if appropriate, the mixture is heated at 30 to 100°C for a short time.

7. Aromatic formaldehyde condensation products of Claim 1, characterised in that the water-soluble condensation products are obtained by the condensation of dihydroxydiphenyl sulphone and phenolsulphonic acid.

8. Aromatic formaldehyde condensation products of Claim 1, characterised in that thiourea dioxide or alkali metal or ammoniumsulphinates or dithionites are used as the reducing agent.

9. The use of the aromatic formaldehyde condensation products and preparations of Claims 1 to 8 for the treatment of textiles and leather.

## Revendications

1. Produits de condensation de formaldéhyde aromatiques, pratiquement incolores, hydrosolubles, contenant des groupements sulfonate et/ou carboxylate, caractérisés en ce qu'on peut les obtenir en ajoutant pendant et/ou après la réaction de condensation des agents réducteurs du groupe constitué par l'hydrogène, l'hydrogène activé, les hydrures métalliques, les dithionites, les thiosulfates, les sulfoxylates, les hydroxymétanesulfinates, les sulfinates ou le dioxyde de thio-urée, l'acide phosphoreux, l'acide hypophosphoreux ou leurs sels ainsi que des réducteurs organiques.

2. Produits de condensation de formaldéhyde aromatiques selon la revendication 1, caractérisés en ce qu'on utilise comme composés aromatiques capables de condensation des dérivés de benzène et de naphtalène substitués par des radicaux alkyle en C₁-C₄ et/ou hydroxyle et/ou cycloalkyle et/ou alcoxy en C₁-C₄ et/ou hydroxyalcoxy en C₁-C₄ et/ou aroxy et/ou aralcoxy et/ou carboxyle et/ou carbalcoxy et/ou sulfonate et/ou arylsulfonyle.

3. Produits de condensation de formaldéhyde aromatiques selon les revendications 1 et 2, caractérisés en ce qu'on utilise également le cas échéant, en plus des composés aromatiques capables de condensation, additionnellement des composés non aromatiques capables de condensation.

4. Produits de condensation de formaldéhyde aromatiques selon les revendications 1 à 3, caractérisés en ce que les composés non aromatiques capables de condensation sont l'urée, la thio-urée, l'éthylène-urée, l'éthylènethio-urée et/ou la mélamine.

5. Produits de condensation de formaldéhyde aromatiques selon les revendications 1 à 4, caractérisés en ce que les produits de condensation hydrosolubles sont ceux obtenus par condensation commune de dioxydiphénylsulfone et d'acide phénolsulfonique et/ou d'acide diphénylsulfonique et/ou d'acide dioxydiphénylsulfonique et/ou d'acide ditolyléthersulfonique et/ou d'acides naphtalènesulfoniques et/ou d'acides hydroxybenzoïques avec le formaldéhyde ou par condensation de dioxydiphénylsulfone avec le formaldéhyde et des bisulfites d'alcalis ainsi que de dioxydiphénylsulfone-acide sulfonique avec le formaldéhyde.

6. Préparations contenant des produits de condensation de formaldéhyde aromatiques selon les revendications 1 à 5, caractérisées en ce qu'on prépare les produits de condensation aromatiques en présence de
0,5 à 10 % d'un agent réducteur du groupe constitué par les hydroxyméthanesulfinates ou les dithionites d'alcalis ou d'ammonium ou le dioxyde de thio-urée et
0,5 à 5 % d'un complexant du groupe constitué par l'acide nitrilotriacétique, l'acide éthylènediaminotétraacétique, l'acide hydroxyéthanediphosphonique et les acides aminométhylènephosphoniques
ou qu'on ajoute ces agents aux produits de condensation finis en solution aqueuse et qu'on chauffe le cas échéant pendant une brève durée à 30-100°C.

7. Produits de condensation de formaldéhyde aromatiques selon la revendication 1, caractérisés en ce que les produits de condensation hydrosolubles sont obtenus par condensation de dioxydiphénylsulfone et d'acide phénolsulfonique.

8. Produits de condensation de formaldéhyde aromatiques selon la revendication 1, caractérisés en ce qu'on utilise comme agent réducteur du dioxyde de thio-urée, des sulfinates ou des dithionites d'alcalis ou d'ammonium.

9. Utilisation des produits de condensation de formaldéhyde aromatiques et des préparations selon les revendications 1 à 8 pour le traitement de textiles et de cuir.
